# EUROPEAN PATENT APPLICATION

(11) **EP 0 653 698 A1**
(43) Date of publication of application: **17.05.1995**
(21) Application number: 94117939.2
(22) Date of filing: 14.11.1994
(51) Int. Cl.: G06F 3/06

(54) **Magnetic disc controller having a function of transferring sector ID information**

(30) Priority: 12.11.1993 JP 306007/93
(71) Applicant: NEC CORPORATION, Tokyo (JP)
(72) Inventor: Tateishi, Hisao, Minato-ku, Tokyo (JP)
(74) Representative: Betten & Resch

(57) **Abstract**

A magnetic disc controller comprises a CPU for controlling the whole of the magnetic disc controller, a ROM storing a program for controlling the central processing unit, a RAM temporarily used by the central processing unit, an interface for transferring data and command between the magnetic disc controller and an external host processor, and a serial-parallel converting circuit for interfacing data between the magnetic disc controller and the magnetic disc apparatus. When data is read out from the magnetic disc apparatus in units of sector, the central processing unit controls to transfer sector ID information of each sector to the external host processor prior to transferring data of each sector.

## Description

### Background of the Invention

### Field of the invention

The present invention relates to a magnetic disc controller having a function of transferring data read from a magnetic disc apparatus, and more specifically a magnetic disc controller configured to transfer data added with a sector identification information at the time of a data transfer.

### Description of related art

As a magnetic disc controller for controlling a transfer of data read from a magnetic disc apparatus, various special purpose LSIs (large scale integrated circuit) such as products available under the tradenames µPD765 and µPD72065 from NEC Corporation of Japan, have been used for a floppy disc apparatus.

In the case of carrying out a transfer of data read from the magnetic disc apparatus by use of the conventional magnetic disc controller, data is transferred from the magnetic disc apparatus to a main memory in a host processor, by utilizing a "READ DATA" command and a "READ DIAGNOSTIC" command. As regards a detailed operation, reference should be made to a user's manual for these conventional products.

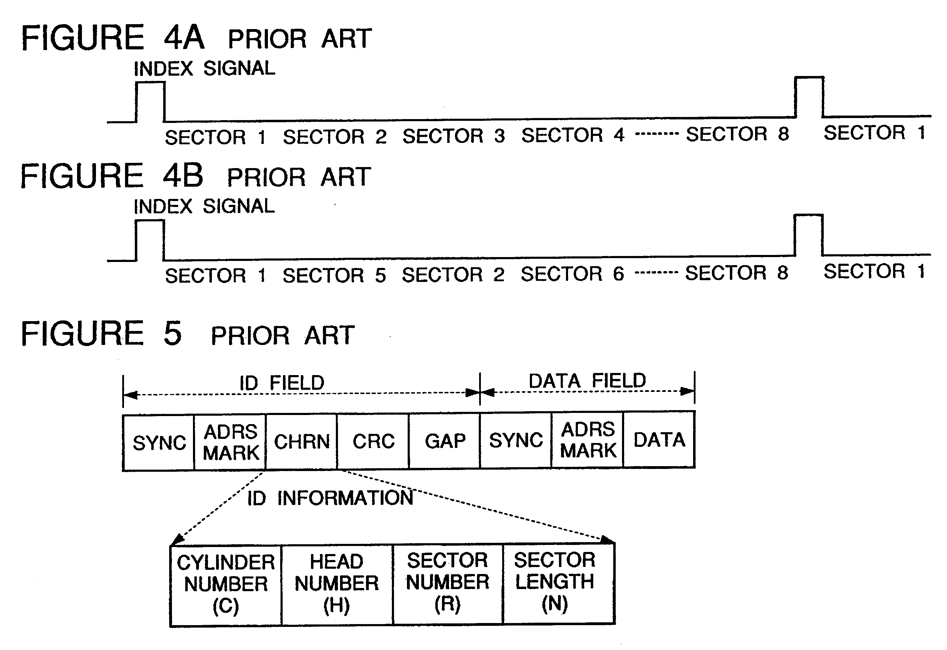

Here, the "READ DATA" command is for reading data from a data field designated by the host processor. The "READ DIAGNOSTIC" command is for checking whether or not the data has been written into a track without fail. The "READ DIAGNOSTIC" command is one kind of reading command for a diagnostic mode, which is similar to the "READ DATA" command, but is different from the "READ DATA" command, in which "READ DIAGNOSTIC" command reads the data although an identification (abbreviated to "ID" hereinafter) field and/or a data field (as shown in Figure 5) includes an error or although it is not a correct ID field.

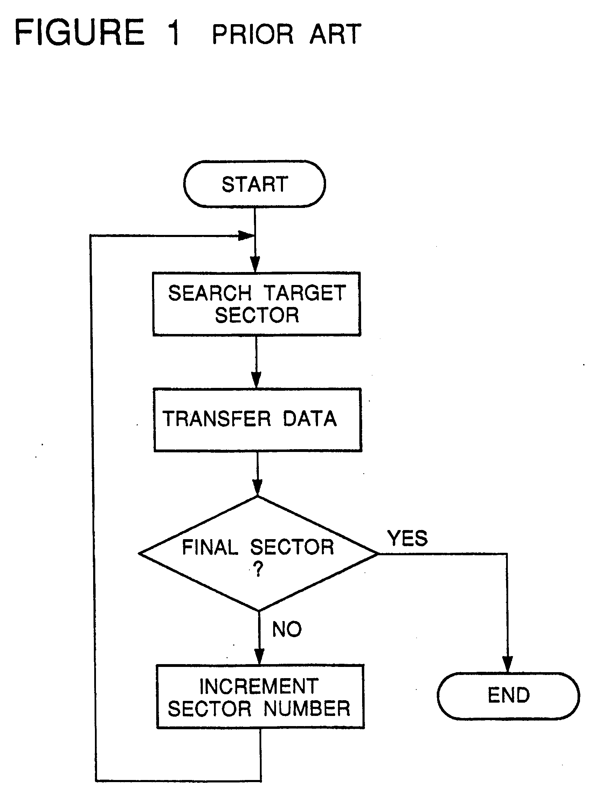

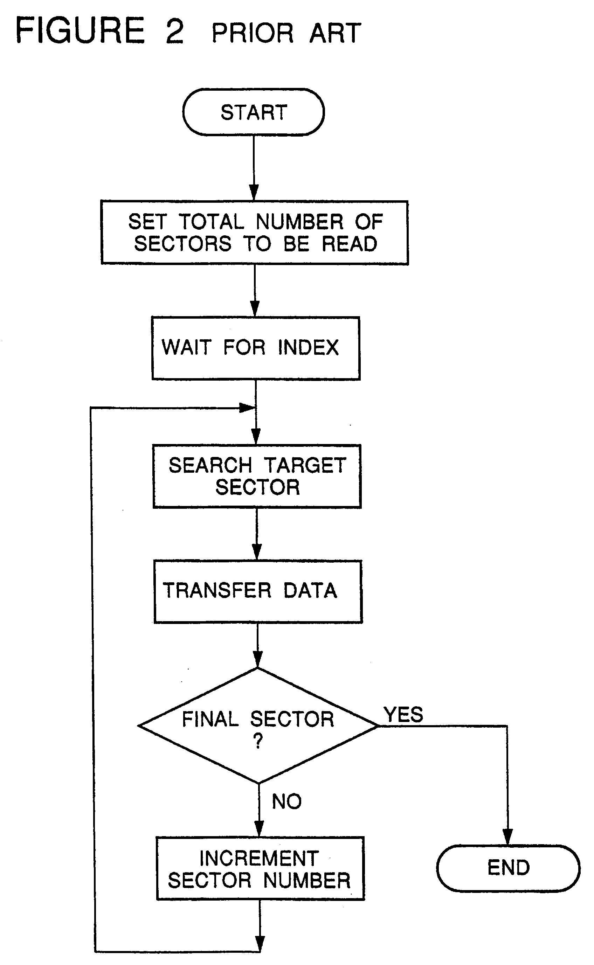

Now, a brief explanation will be made on a data transfer in the conventional magnetic disc controller with reference to Figures 1 and 2.

Figure 1 shows a flow chart illustrating a processing for the "READ DATA" command.

After the magnetic disc controller receives a command form the host processor and recognizes that the received command is the "READ DATA" command, the magnetic disc controller starts an operation for searching a target sector, as shown in Figure 1. Here, the host processor sets a starting sector and a final sector.

If the target sector is found out in the searching operation, data is read out from the target sector, and is transferred to a main memory.

After the transfer of data from the read-out sector is completed, whether the read-out sector is the final sector or not is discriminated. If the read-out sector is not the final sector, sector information, particularly, a sector number is incremented, and then, the sector search, the data transfer and the final sector discrimination are repeated in accordance with the flow chart shown in Figure 1 until the read-out sector becomes consistent with the final sector.

Figure 2 shows a flow chart illustrating a processing for the "READ DIAGNOSTIC" command.

After the magnetic disc controller receives a command form the host processor and recognizes that the received command is the "READ DIAGNOSTIC" command, the magnetic disc controller waits for an index signal indicative of one rotation of a media (such as a floppy disc) in the magnetic disc apparatus. In the case of the "READ DIAGNOSTIC" command, the search is started from a sector positioned just after the index, namely, from the sector 1. Therefore, the sector number of the target sector is set to "1", and the sector number of the final sector is set to the total number of sectors to be read.

After the magnetic disc controller detects the index signal, the magnetic disc controller starts to search the target sector. In the case of the "READ DIAGNOSTIC" command, however, differently from the case of the "READ DATA" command, although a CRC error is detected when a sector ID information of the sector searched is read, or alternatively, although the sector ID information properly read is different from that of the target sector, it is treated that the sector information has been properly recognized.

After the magnetic disc controller searches the sector ID information in the search operation, the data of the sector searched is transferred to the main memory.

After the data has been transferred to the main memory, whether or not the number of data-transferred sectors is consistent with the total number of sectors to be read, is discriminated. If consistency is not obtained, the above mentioned flow of operations is repeated by searching a next sector and transferring data, until the number of data-transferred sectors becomes consistent with the total number of sectors to be read.

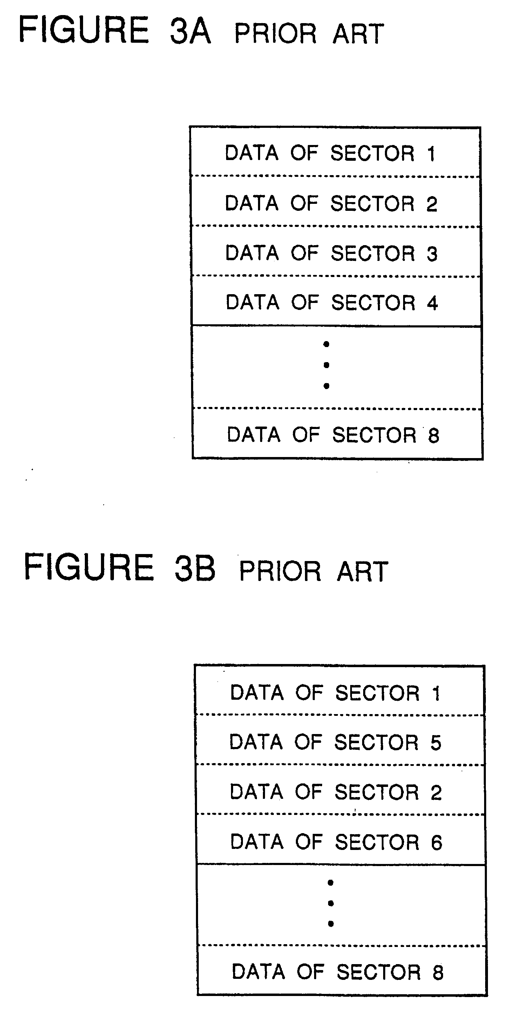

When the above mentioned reading command is used, the date read out from the magnetic disc apparatus is located in the main memory of the host processor as shown in Figures 3A and 3B.

If the sectors are not interleaved in the recording media as shown in Figure 4A, the data is located on the main memory as shown in Figure 3A regardless of which of the "READ DATA" command and the "READ DIAGNOSTIC" command has been executed for reading.

However, if the sectors are interleaved in the recording media as shown in Figure 4B, when the "READ DATA" command is executed, the data is located on the main memory as shown in Figure 3A similarly to the case of the no sector-interleaving. But, when the "READ DIAGNOSTIC" command is executed, since the data is transferred sequentially from a sector just after the index, the data is located on the main memory as shown in Figure 3B.

Incidentally, since a removable magnetic recording media such as a floppy disc can be easily illegally copied, a data format having sectors interleaved as shown in Figure 4B is adopted in order to countermeasure with the illegal copying.

However, in the case of reading out the data from magnetic disc apparatus by use of the above mentioned conventional disc controller, when a rotational delay time of the disc occurs, a long time is needed until the reading of the data is completed.

For example, in the case of the "READ DATA" command, the target sector to be firstly read out (a starting sector) is designated to the magnetic disc controller from the host computer.

In the magnetic disc apparatus, if it so happens that the target sector search as shown in Figure 1 is started after the starting sector has passed, it must continue to wastefully wait until the target sector rotates about one rotation and then is read out.

On the other hand, in the case of the "READ DIAGNOSTIC" command, if it so happens that the target sector search as shown in Figure 2 is started after the index has passed in the magnetic disc apparatus, it must continue to wastefully wait until the index rotates about one rotation and then is read out.

As seen from the above, a time required until the data of all sectors on one track of the magnetic recording media has been read out becomes considerably long in the case of using the above mentioned commands, since a time corresponding to two rotations of the disc at maximum is required because of the rotational delay time.

### Summary of the Invention

Accordingly, it is an object of the present invention to provide a magnetic disc controller which has overcome the above mentioned defect of the conventional one.

Another object of the present invention is to provide a magnetic disc controller capable of remarkably reducing the time required for reading out data from the magnetic disc apparatus.

The above and other objects of the present invention are achieved in accordance with the present invention by a magnetic disc controller for controlling a magnetic disc apparatus, comprising a central processing unit for controlling the whole of the magnetic disc controller, a first memory storing a program for controlling the central processing unit, a second memory temporarily used by the central processing unit, an interface for transferring data and command between the magnetic disc controller and an external host processor, and a serial-parallel converting circuit controlled by the central processing unit for writing data received from the interface to the magnetic disc apparatus and for supplying data read from the magnetic disc apparatus to the interface, the central processing unit being configured to control to the effect that the data is read from the magnetic disc apparatus in units of sector, and sector identification information of each sector is transferred to the external host processor before data of each sector is transferred to the external host processor.

Accordingly, in the magnetic disc controller in accordance with the present invention, the sector identification information and the data of each sector is transferred to the host processor in the order starting from a sector detected in the first place after the sector search operation is started, without waiting for the index signal.

In one embodiment of the magnetic disc controller in accordance with the present invention, at least the sector number is transferred to the host processor as the sector identification information.

As mentioned above, when the data is read out from the magnetic disc apparatus, the magnetic disc controller in accordance with the present invention starts the data transfer in the order starting from a sector detected in the first place after the sector search operation is started. On the other hand, in order to allow the host processor to be able to know in which of sectors the transferred data is included, the magnetic disc controller in accordance with the present invention performs the data transfer by adding the sector information to the data to be transferred. In this featured point, the magnetic disc controller in accordance with the present invention is different from the conventional ones. In addition, this feature can makes zero the rotational delay time of the disc, which was a problem in the prior art.

The above and other objects, features and advantages of the present invention will be apparent from the following description of preferred embodiments of the invention with reference to the accompanying drawings.

### Brief Description of the Drawings

Figure 1 shows a flow chart illustrating a conventional processing for the "READ DATA" command;
Figure 2 shows a flow chart illustrating a conventional processing for the "READ DIAGNOSTIC" command;
Figures 3A and 3B illustrate a data location on the main memory in the no sector-interleaved case and in the sector-interleaved case, respectively;
Figures 4A and 4B are timing charts illustrating the relation between the index signal and the sectors in the no sector-interleaved case and in the sector-interleaved case, respectively;
Figure 5 illustrates a data format including the sector ID information;
Figure 6 is a block diagram of the magnetic disc controller in accordance with the present invention;
Figure 7 shows a flow chart illustrating a processing for the read-out command in a first embodiment of the present invention;
Figure 8 illustrates a data location on the main memory when the read-out command is executed in the first embodiment of the present invention (no sector-interleaved case);
Figure 9 illustrates a data location on the main memory when the read-out command is executed in the first embodiment of the present invention (sector-interleaved case);
Figure 10 shows a flow chart illustrating a processing for the read-out command in a second embodiment of the present invention;
Figure 11 illustrates a data location on the main memory when the read-out command is executed in the second embodiment of the present invention (no sector-interleaved case); and
Figure 12 illustrates a data location on the main memory when the read-out command is executed in the second embodiment of the present invention (sector-interleaved case).

### Description of the Preferred embodiments

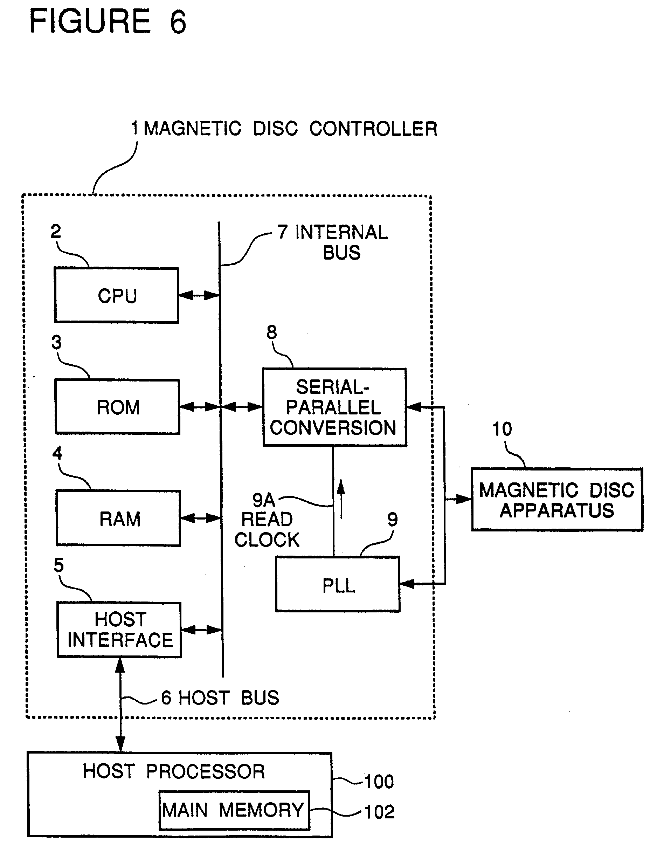

Referring to Figure 6, there is shown a block diagram of the magnetic disc controller in accordance with the present invention.

The shown magnetic disc controller is generally designated by Reference Numeral 1, and is coupled to a magnetic disc apparatus 10 and a host processor 100 having a main memory 102.

The magnetic disc controller 1 includes a CPU (central processing unit) 2 for controlling an overall sequence of the magnetic disc controller. The CPU 2 is coupled to an internal bus 7. A ROM (read only memory) 3 storing a program and other information for controlling the sequence of the operation of the CPU is also coupled to the internal bus 7, so that the CPU 2 receives the program and/or and other necessary information from the ROM 3.

A RAM (random access memory) 4 is coupled to the internal bus 7, so that the CPU 2 can temporarily store in the RAM 3 data and control information required in accordance with an advance of the sequence of the operation.

The magnetic disc controller 1 also includes a host interface 5 coupled to the internal bus 7 and also coupled through a host bus 6 to the host processor 100. In the case of writing data to the magnetic disc apparatus 10, data is transferred in units of byte from the host processor 100 through the host bus 6 to the host interface 5, and also transferred from the host interface 5 through the internal bus 7 to a serial-parallel conversion circuit 8.

In the serial-parallel conversion circuit 8, the data in units of byte is modulated on the basis of a predetermined recording modulation system, and then, converted to a serial data train, which is written into the magnetic disc apparatus 10.

On the other hand, in the case of reading out data from the magnetic disc apparatus 10, a PLL (phase locked loop) 9 receives the serial data read out from the magnetic disc apparatus 10, and generates a read clock signal in synchronism with the read-out serial data. On the basis of the read clock signal 9A, the serial-parallel conversion circuit 8 converts the serial data from the magnetic disc apparatus 10 into a data train in units of byte. The data train in units of byte is outputted through the internal bus 7, the host interface 5, and the host bus 6 to the host processor 100.

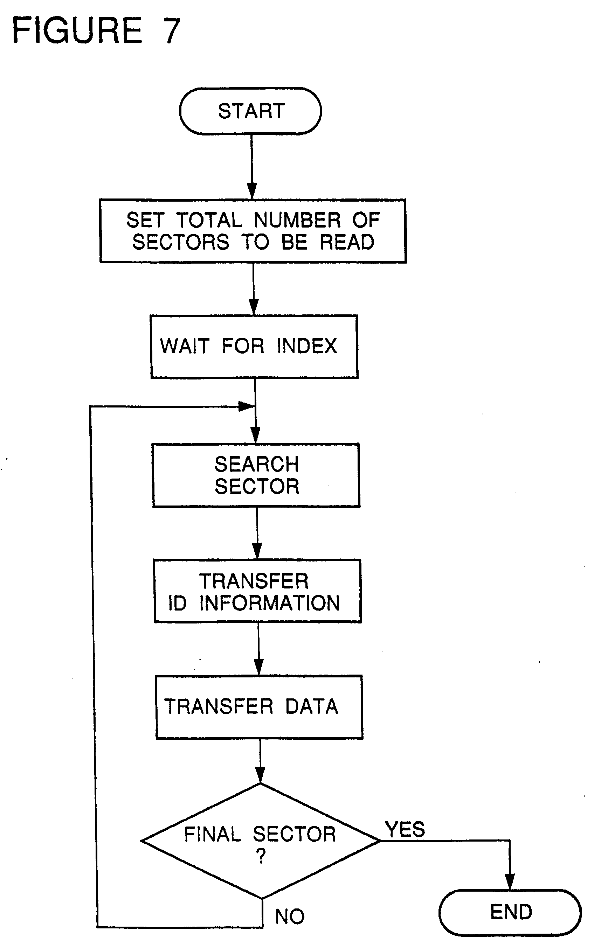

Now, a first embodiment of the reading operation of the shown magnetic disc controller will be explained with reference to the flow chart of Figure 7, which is based on the "READ DIAGNOSTICS" command explained hereinbefore.

If the magnetic disc controller 1 receives a command form the host processor 100 and recognizes that the received command is the read-out command, the magnetic disc controller 1 initially sets the total sector number by the sector number of a starting sector and the final sector, and then, waits for an index signal indicative of one rotation of a media in the magnetic disc apparatus 10.

After the magnetic disc controller 1 detects the index signal, the magnetic disc controller 1 starts to search the target sector. In the read-out command of this embodiment, when the sector search is performed, if a proper sector information is detected, the sector ID information is transferred to the main memory 102 of the host processor 100, differently from the above mentioned "READ DATA" command and "READ DIAGNOSTIC" command in the prior art.

Here, the sector ID information is ordinarily composed of a cylinder number, a head number, a sector number and a sector length, as shown in Figure 5. The sector ID information transferred to the host processor is required to include at least the sector number.

Immediately after the sector ID information is transferred to the main memory 102 of the host processor 100, data in data field following the sector ID information is transferred to the main memory 102 of the host processor 100.

After the transfer of the data of the sector is completed, whether or not there remain a sector or sectors to be read out continuously is discriminated. In other words, whether or not the number of data-transferred sectors is consistent with the total number of sectors to be read out, is discriminated. If consistency cannot be obtained, a sector to be read out next is searched, and the sector ID information and the data of the detected sector are transferred to the main memory of the host processor, and then, whether or not the number of data-transferred sectors is consistent with the total number of sectors to be read out, is discriminated. This operation is repeated until the number of data-transferred sectors becomes consistent with the total number of sectors to be read out.

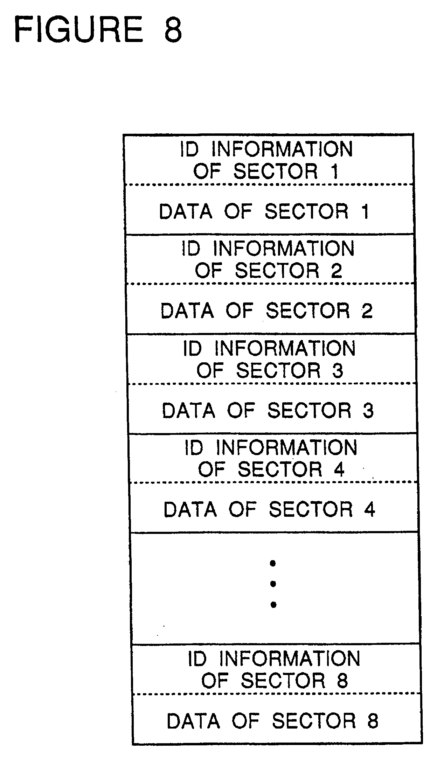

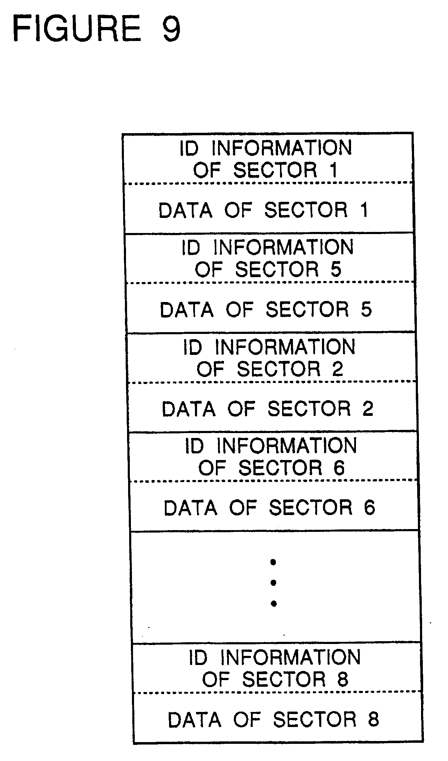

When the data formats shown in Figures 4A and 4B are read out in accordance with the flow of processing shown in Figure 7, the information is located on the main memory as shown in Figure 8 and 9, respectively.

When the non-sector-interleaved data format shown in Figures 4A is read out, the ID information of each sector is transferred just before the data of that sector, as shown in Figure 8.

On the other hand, when the sector-interleaved data format shown in Figures 4B is read out, the ID information of each of the interleaved sectors is transferred just before the data of that sector, as shown in Figure 9.

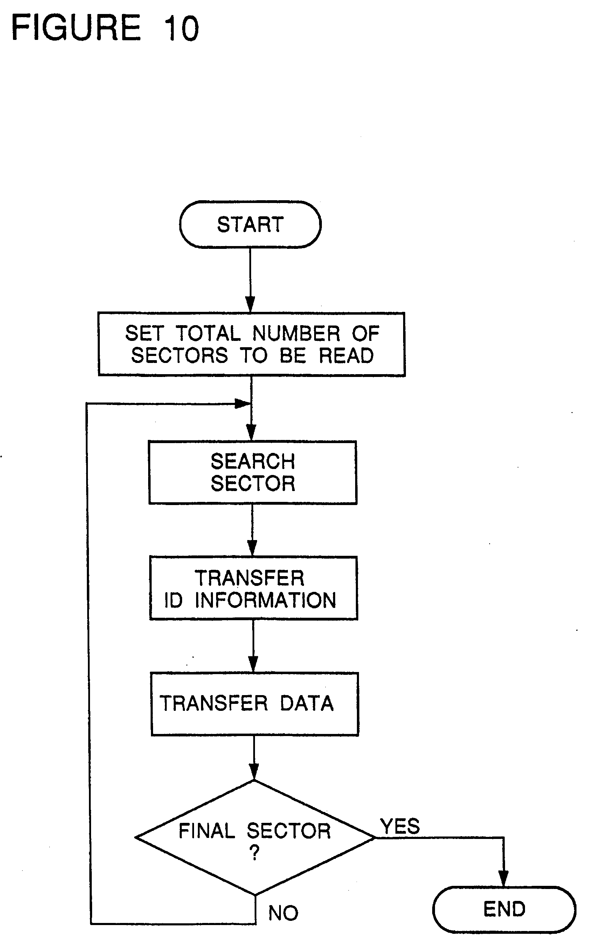

Next, a second embodiment of the reading operation of the magnetic disc controller will be explained with reference to the flow chart of Figure 10.

As shown in Figure 10, after the magnetic disc controller 1 receives a command form the host processor 100 and recognizes that the received command is the read-out command, the magnetic disc controller 1 initially sets the total sector number by the sector number of a starting sector and the final sector. Thereafter, however, the magnetic disc controller 1 immediately starts to search the target sector, without waiting for the index signal, differently from the first embodiment shown in Figure 7.

In the operation of the sector search, if the magnetic disc controller 1 detects a proper ID information, the magnetic disc controller 1 immediately transfers the sector ID information to the host processor. Namely, if the sector number of the detected sector ID information is included in sectors to be read out, the sector ID information is immediately transferred to the main memory 102 of the host processor 100.

Here, as mentioned above, the sector ID information is ordinarily composed of a cylinder number, a head number, a sector number and a sector length. The information transferred to the main memory of the host processor is required to include at least the sector number.

Immediately after the sector ID information is transferred to the main memory of the host processor, data in data field following the sector ID information is transferred to the main memory of the host processor.

After the transfer of the data of the sector is completed, whether or not the number of data-transferred sectors is consistent with the total number of sectors to be read out, is discriminated. If consistency cannot be obtained, a sector to be read out next is searched, and the sector ID information and the data of the detected sector are transferred to the main memory of the host processor, and then, whether or not the number of data-transferred sectors is consistent with the total number of sectors to be read out, is discriminated. This operation is repeated until the number of data-transferred sectors becomes consistent with the total number of sectors to be read out.

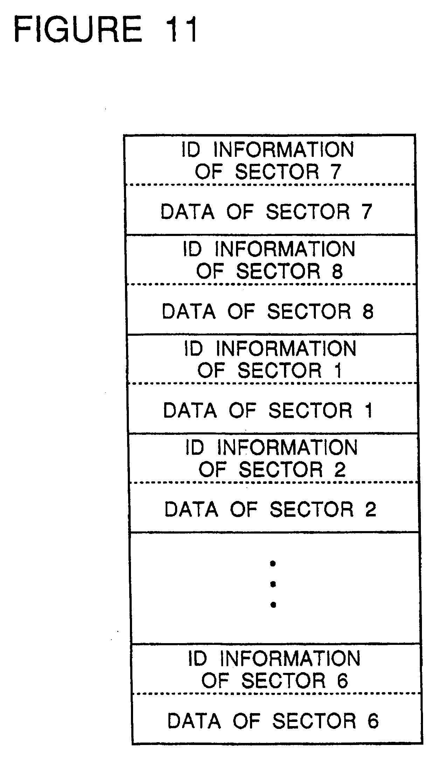

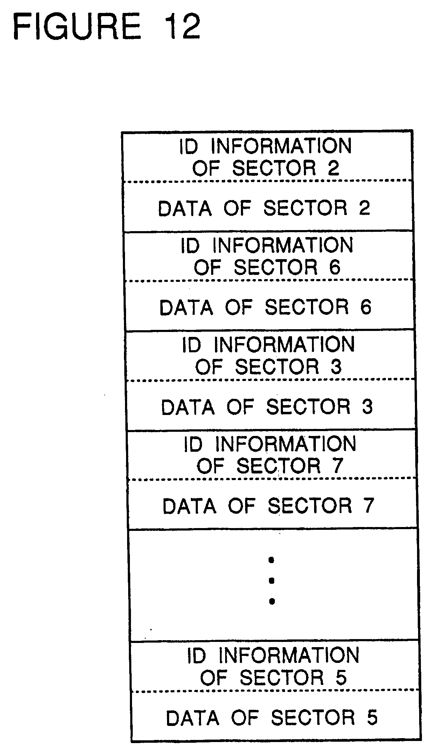

When the data formats shown in Figures 4A and 4B are read out in accordance with the flow of processing shown in Figure 10, the information is located on the main memory as shown in Figure 11 and 12, respectively.

When the non-sector-interleaved data format shown in Figures 4A is read out, the ID information of each sector is transferred just before the data of that sector as shown in Figure 11.

For example, assuming that the total number of sectors to be read out is eight, the magnetic disc controller in accordance with the second embodiment does not wait for the sector 1 (starting sector) if the sector 1 had passed in the magnetic disc apparatus when the sector search is started. As shown in Figure 11, the magnetic disc controller carries out transfer of the sector ID information and the data to the main memory in the order starting from the sector 7 detected in the first place after the sector search is started, and then, going to the sector 8, the sector 1, · · ·. Finally, the sector 6 is read out as the final sector when the total number of the read-out sectors becomes eight.

On the other hand, when the sector-interleaved data format shown in Figures 4B is read out, the ID information of each of the interleaved sectors is transferred just before the data of that sector as shown in Figure 12.

As shown in Figure 12, even when the sector-interleaved data format is read out in this embodiment, the magnetic disc controller in accordance with the second embodiment does not wait for the sector 1 (starting sector) if the sector 1 had passed in the magnetic disc apparatus when the sector search is started. Namely, the magnetic disc controller carries out transfer of the sector ID information and the data to the main memory in the order starting from the sector 2 detected in the first place after the sector search is started, and then, going to the sector 6, the sector 3, · · ·. Finally, the sector 5 is read out as the final sector when the total number of the read-out sectors becomes eight.

In the second embodiment, the sector ID information is located just before the data of the sector on the main memory, similarly to the first embodiment.

Differently from the first embodiment, the second embodiment is characterized in that the sector ID information and the data of the sector detected in the first place after the sector search is started, is transferred without waiting for the index signal. Therefore, since there is no rotational delay time for waiting for the index signal, the data transfer velocity in the data read-out processing can be further speeded up.

The present invention has been described with reference to the first and second embodiments. By using the function of transferring the sector ID information, the time required for reading out all the sector information on one track (particularly in the second embodiment) is shortened in comparison with the conventional the "READ DATA" command and "READ DIAGNOSTICS" command, by a time corresponding to the rotational delay time of the disc. In other words, the time required for reading out all the sector information on one track in the conventional magnetic disc controller has become two rotations of the disc at maximum. On the other hand, the data can be read out during one rotation of the disc.

For example, the magnetic disc controller in accordance with the present invention is applied to a floppy disc apparatus, since a disc rotational period of the floppy disc apparatus is about 200 milliseconds, the read-out time is 400 milliseconds at maximum in the conventional example, but 200 milliseconds at maximum in the present invention.

As explained in connection with the first and second embodiments, since the sector ID information, in particular, the sector number, is stored before the data on the main memory, when the sector-interleaved format data is read out, the read-out data can be relocated in the order of the sector number.

The invention has thus been shown and described with reference to the specific embodiments. However, it should be noted that the present invention is in no way limited to the details of the illustrated structures but changes and modifications may be made.

## Claims

1. A magnetic disc controller for controlling a magnetic disc apparatus, the magnetic disc controller being coupled to a magnetic disc apparatus and an external host processor, the magnetic disc controller being configured to write data received from said external host processor to said magnetic disc apparatus and to supply data read from said magnetic disc apparatus to said external host processor, said magnetic disc controller being also configured to control to the effect that the data is read out from the magnetic disc apparatus in units of sector, said magnetic disc controller including means for transferring sector identification information of each sector to said external host processor before data of the same sector is transferred to said external host processor.

2. A magnetic disc controller for controlling a magnetic disc apparatus, comprising a central processing unit for controlling the whole of the magnetic disc controller, a first memory storing a program for controlling said central processing unit, a second memory temporarily used by said central processing unit, an interface for transferring data and command between the magnetic disc controller and an external host processor, and a serial-parallel converting circuit controlled by said central processing unit for writing data received from said interface to the magnetic disc apparatus and for supplying data read from the magnetic disc apparatus to said interface, said central processing unit being configured to control to the effect that the data is read out from the magnetic disc apparatus in units of sector, and sector identification information of each sector is transferred to the external host processor before data of each sector is transferred to the external host processor.

3. A magnetic disc controller claimed in Claim 2 wherein said central processing unit is also configured to transfer said sector identification information and said data of each sector to said host processor in the order starting from a sector detected in the first place after the sector search operation is started, without waiting for the index signal.

4. A magnetic disc controller claimed in Claim 3 wherein said central processing unit is also configured to transfer at least the sector number to said host processor as said sector identification information.

5. A magnetic disc controller claimed in Claim 2 wherein said central processing unit is also configured to transfer at least the sector number to said host processor as said sector identification information.
